(19) 

Europäisches
Patentamt
European
Patent Office
Office européen
des brevets

(11) **EP 4 676 058 A1**

(12) **EUROPEAN PATENT APPLICATION**

(43) Date of publication:
**07.01.2026 Bulletin 2026/02**

(21) Application number: **24306061.3**

(22) Date of filing: **01.07.2024**

(51) International Patent Classification (IPC):
*H04N 19/70* (2014.01)   *G06N 3/045* (2023.01)
*G06N 3/08* (2023.01)

(52) Cooperative Patent Classification (CPC):
**H04N 19/70; G06N 3/045; G06N 3/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **SCHNITZLER, Francois
  56890 SAINT AVE (FR)**
• **LAMBERT, Anne
  35250 SAINT-AUBIN-D'AUBIGNE (FR)**
• **LE MEUR, Olivier
  35160 TALENSAC (FR)**
• **DAMODARAN, Bharath Bhushan
  56000 VANNES (FR)**

(74) Representative: **Vossius & Partner
Patentanwälte Rechtsanwälte mbB
Siebertstraße 3
81675 München (DE)**

(54) **ENCODING PARTITION-BASED INR (IMPLICIT NEURAL REPRESENTATION)**

(57) In one implementation, an image including multiple sets of INR (Implicit Neural Representation) parameters is decoded, wherein at least a sample in the decoded image represents an INR parameter; multiple partitions are decoded for the signal, wherein each set of the multiple sets of INR parameters corresponds to a respective partition of the multiple partitions of the signal; and the signal is reconstructed based on the multiple partitions of the signal. On the corresponding encoder side, the signal is partitioned into multiple partitions; a set of INR parameters is obtained to represent each partition of the multiple partitions of the signal; each set of INR parameters is converted to a corresponding region in an image, wherein at least a sample in the corresponding region represents an INR parameter of the set of INR parameters; and the image is encoded.

input signal

↓

| Partition signal into INR partitions, learn one INR for each partition | ～ 810 |

↓

| Convert collection of weights to image | ～ 820 |

↓

| Encode Image | ～ 830 |

↓

bitstream

**FIG. 8**

EP 4 676 058 A1

**Description**

TECHNICAL FIELD

The present embodiments generally relate to a method and an apparatus for neural compression.

BACKGROUND

Neural compression or learning-based compression is the application of neural networks and other machine learning methods to data compression. Those techniques are currently being investigated by MPEG, and there is a new ad-hoc group which focuses on the Implicit Neural Representation-based compression (INR-based) within Working Group 4. Typically, INR-based compression techniques have a far lower computational complexity than end-to-end neural compression approaches.

SUMMARY

According to an embodiment, a method of decoding a signal is presented, comprising: decoding an image, wherein the image includes a plurality sets of INR (Implicit Neural Representation) parameters, wherein at least a sample in the decoded image represents an INR parameter; decoding a plurality of partitions for the signal, wherein each set of the plurality sets of INR parameters corresponds to a respective partition of the plurality of partitions of the signal; and reconstructing the signal based on the plurality of partitions of the signal.

According to another embodiment, an apparatus for decoding a signal is presented, comprising one or more processors and at least one memory coupled to the one or more processors, wherein the one or more processors are configured to: decode an image, wherein the image includes a plurality sets of INR (Implicit Neural Representation) parameters, wherein at least a sample in the decoded image represents an INR parameter; decode a plurality of partitions for the signal, wherein each set of the plurality sets of INR parameters corresponds to a respective partition of the plurality of partitions of the signal; and reconstruct the signal based on the plurality of partitions of the signal.

In one embodiment, the image is decoded based on a block-based hybrid video decoder, according to an image or video compression standard. During the process, dequantization may be performed.

In one embodiment, the image can include a plurality of regions, wherein each set of INR parameters is represented by one or more regions of the image.

In one embodiment, the plurality of regions are at a same size, and the plurality of partitions of the signal are allowed to have different sizes.

In one embodiment, the plurality sets of INR parameters are mapped to the plurality of partitions of the signal according to a processing order.

In one embodiment, the decoder can further decode information indicative of at least a size and a position of blocks in the image.

According to another embodiment, a method of encoding a signal is presented, comprising: partitioning the signal into a plurality of partitions; obtaining a set of INR parameters representing each partition of the plurality of partitions of the signal; converting each set of INR parameters to a corresponding region in an image, wherein at least a sample in the corresponding region represents an INR parameter of the set of INR parameters; and encoding the image.

According to another embodiment, an apparatus for encoding a signal is presented, comprising one or more processors and at least one memory coupled to the one or more processors, wherein the one or more processors are configured to: partition the signal into a plurality of partitions; obtain a set of INR parameters representing each partition of the plurality of partitions of the signal; convert each set of INR parameters to a corresponding region in an image, wherein at least a sample in the corresponding region represents an INR parameter of the set of INR parameters; and encode the image.

In one embodiment, conversion to the image includes quantizing the INR parameters.

In one embodiment, the region is a line, a column, a square block or a rectangular block in the image.

In one embodiment, the size of the region can be determined based on a number of parameters in each set of INR parameters.

In one embodiment, the signal can correspond to a plurality of pictures in a video.

One or more embodiments also provide a computer program comprising instructions which when executed by one or more processors cause the one or more processors to perform the encoding method or decoding method according to any of the embodiments described herein. One or more of the present embodiments also provide a computer readable storage medium having stored thereon instructions for encoding or decoding video data according to the methods described herein.

One or more embodiments also provide a computer readable storage medium having stored thereon video data generated according to the methods described above. One or more embodiments also provide a method and apparatus for transmitting or receiving the video data generated according to the methods described herein.

BRIEF DESCRIPTION OF THE DRAWINGS

FIG. 1 illustrates a block diagram of a system within which aspects of the present embodiments may be implemented.

FIG. 2 illustrates a simple neural network used for Implicit Neural Representation (INR).

FIG. 3 illustrates a typical process to encode a signal using INR.

FIG. 4 illustrates a neural architecture typical of hybrid INR.

FIG. 5 illustrates kiloNERF.

FIG. 6 illustrates an architecture of partition-based INR.

FIG. 7 illustrates a typical encoding procedure.

FIG. 8 illustrates an encoding method, according to an embodiment.

FIG. 9 illustrates a parameter image containing P lines, according to an embodiment.

FIG. 10 illustrates that a set of INR parameters are organized into a 2D parameter block, according to an embodiment.

FIG. 11 illustrates an example of INR partitions, parameter blocks, and coding units in the auxiliary video encoder, according to an embodiment.

FIG. 12 illustrates a parameter image with multiple channels.

FIG. 13 illustrates a decoding method, according to an embodiment.

FIG. 14 illustrates an encoding algorithm, according to another embodiment.

FIG. 15 illustrates a decoding algorithm, according to another embodiment.

DETAILED DESCRIPTION

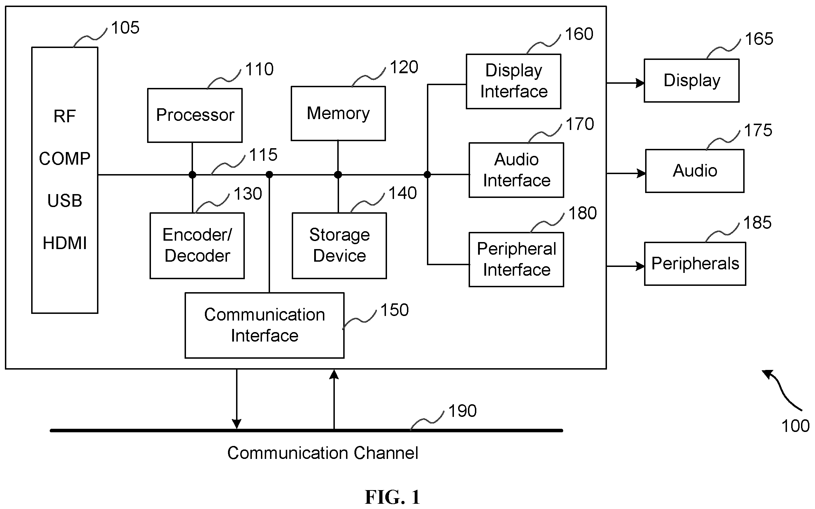

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, JPEG Pleno, MPEG-I, HEVC, VVC or MPEG VCM.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface Ics or within processor 110 as necessary. The demodulated, error corrected, and demultiplexed stream is provided to various processing elements, including, for example, processor 110, and encoder/decoder 130 operating in combination with the memory and storage elements to process the datastream as necessary for presentation on an output device.

Various elements of system 100 may be provided within an integrated housing. Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802.11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

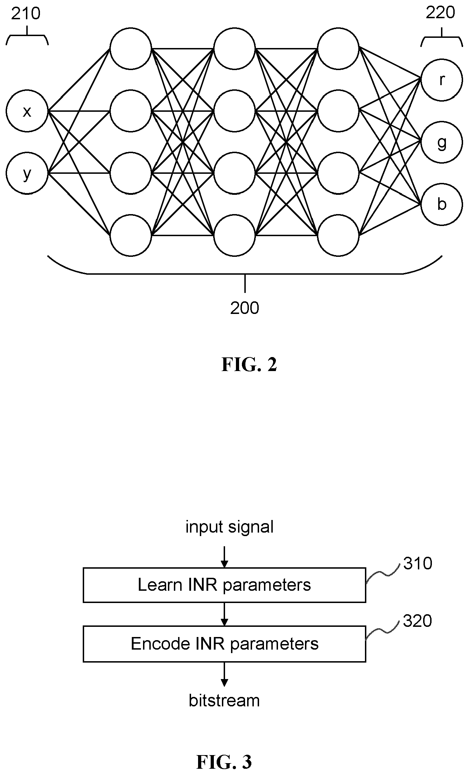

FIG. 2 illustrates a simple neural network used for implicit neural representation (INR) of an RGB image. Such a neural network used for INR can be referred to as an INR network. INR parameterizes a signal as a function (200), which takes coordinates (210) as input and outputs values (220) of a signal at these coordinates. INR has recently been applied to image, videos or 3D objects among other applications. In the image case, the inputs (210) can be pixel coordinates ($x,y$) and the INR may output (220) the color values of the input pixel that can be, for example, ($r,g,b$) or ($y,u,v$). The input coordinates may be modified by a transformation before being used as input for the neural network. This transformation can be a Fourier mapping, coordinate transformation, normalization, etc.

The INR can be used to reconstruct a signal by computing the signal values for every necessary coordinate inputs. It can be used to upsample a signal by generating output for input coordinates corresponding to the upsampled pixels, for example the mean of the coordinates between two consecutive pixels for upsampling by a factor of 2.

An INR network (200) is typically a neural network, composed of multiple neural layers, such as fully connected layers. In FIG. 2, the network has four layers. Intermediate outputs are represented by circles. Each neural layer can be described as a function that first multiplies the input by a tensor, adds a vector called the bias and then applies a nonlinear function on the resulting values. The shape (and other characteristics) of the tensor and the type of non-linear functions are called the architecture of the network. We will denote the values of the tensor and the bias by the term "weights". The weights and, if applicable, the parameters of the non-linear functions, are called the parameters $\theta$ of the network. The architecture and the parameters define a "model". We will use $f_\theta$ to denote an INR function parameterized by $\theta$.

FIG. 3 illustrates a typical process to encode a signal using an INR. This is done by optimizing the parameters $\theta$ (or a subset of them) of the INR network to reconstruct the signal (310) and optionally encoding them (320) to create the output bitstream. For an image $I$ of size ($M \times N$), the parameters θ can, for example, be optimized by minimizing the following loss function:

$$Loss = D(I, f_{\boldsymbol{\theta}}) + \lambda \times R(\theta)$$

$$D_{MSE} = \frac{1}{M \times N} \sum_{x,y} (I(x,y) - f_{\boldsymbol{\theta}}(x,y))^2 \quad ,$$

where $D$ is a distortion which quantifies the difference between the reconstructed image by $f_\theta$ and the original image $I$, $R$ is the bitrate of the encoded parameters and $\lambda$ a trade-off parameter between $D$ and $R$. $D$ could be any differentiable distortion measure, such as mean squared error as in the second equation. M and N are the width and height of an image, respectively. Other metrics such as LPIPS (learned perceptual image patch similarity) can also be used in this case. The optimization of the parameters $\theta$ is typically performed by a machine learning approach such as a batch gradient descent method.

To decompress the signal, $f_\theta$ is evaluated at all relevant coordinates. These coordinates can be selected at decoding. A typical choice would be all pixel coordinates for an image or video. As an example, for a 256x256 pixel image, these coordinates could be all pairs ($x,y$) for all $x \in \{0,1, ...,255\}$ and $y \in \{0,1, ...,255\}$. Other choices are possible, for example to upsample, downsample or extend the original image.

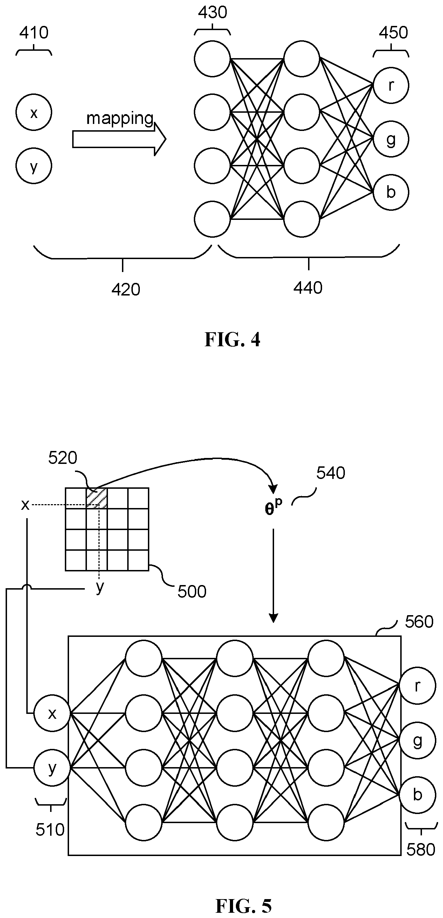

FIG. 4 illustrates a neural architecture typical of the first class of such approaches, Hybrid INR, such as COOL-CHIC. The input coordinates (410) are first mapped (420) to a vector of features (430). Such a mapping (420) can, for example, rely on a lookup table, a partition of the signal, a hash function and/or a linear combination of features. These features are then used as input for an INR network (440) that outputs the value (450) of the signal for the input coordinates (410). Using such an architecture rather than a plain INR network helps to handle local features of the input signal. Indeed, the features for a given location are generally completely or mostly independent from features at other coordinates and can be tailored to each location.

Using one INR network forces the network to encode everything, meaning that all parameters contribute to the whole signal. This makes training difficult and may lead to a large network. Existing hybrid INR solutions train faster but do not fully exploit the structure of the signal, as hybrid approaches uses the same neural network parameters for the whole signal, thus requiring a large network to encode all possible transforms. A solution proposed to solve this problem is to partition the signal domain and to learn one INR model for each part. For example, a temporal signal such as a video, a dynamic 3D scene or a hologram can be divided into temporal frames, and each frame encoded by a network. Frames can also be divided further.

FIG. 5 illustrates such an approach: kiloNERF. In this approach, the signal domain (500) is divided into $P$ non-overlapping windows of a predefined size. Each window is associated to a set of different INR parameters. The values of input coordinates (510) are first mapped to the index $i$ of the corresponding window (520) of the signal domain. The corresponding window (520) is the window that contains the point of these input coordinates. The parameters $\theta^p$ (540) associated to this window are then recovered and used to parameterize an INR network (560). This network is then used to transform the input coordinates (510) into the value (580) of the signal at these coordinates.

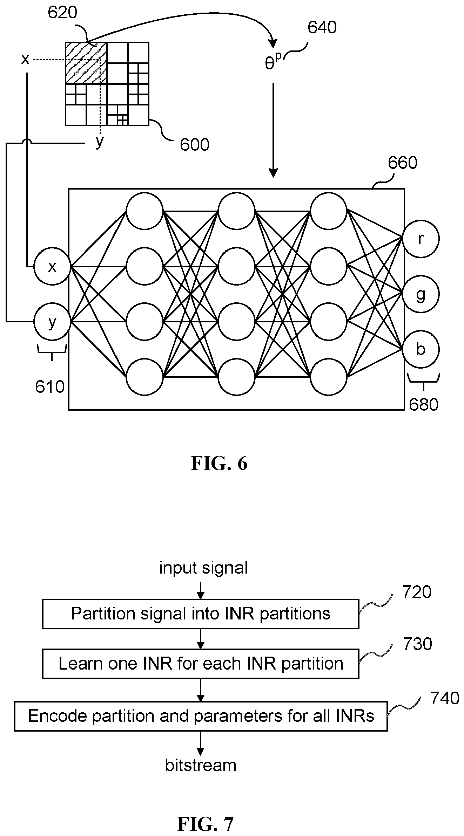

In a commonly owned PCT Patent Application No. PCT/EP2024/053955, entitled "Coding Unit Based Implicit Neural Representation (INR)", we have proposed to consider the input domain as a coding tree unit (CTU) and to partition it into INR partitions and to learn a set of different values for the INR parameters for each INR partition, with the architecture illustrated in FIG. 6 for an image. The domain (600) of the signal is partitioned into INR partitions using quadtree recursive partitioning. Other recursive partitioning could be used, such as binary, ternary trees or geometric partitioning.

For each INR partition, a specific set of K INR parameters $\theta^p \in \mathbb{R}^K$ (640) is trained to encode the signal values within this INR partition. The signal is reconstructed as follows. Inputs coordinates (610) are first used to identify the INR partition (620) that contains the point defined by these coordinates. The associated parameters $\theta^p$ (640) are used to parameterize an INR network (660). Finally, the input coordinates (610) are used as input of this network to compute the reconstructed signal value (680) at these coordinates.

A typical encoding procedure for these and similar approaches is illustrated in FIG. 7. The input signal is first partitioned (720) into INR partitions using partitioning. In a second step (730), one INR is learned for each INR partition. Then each INR and the signal partition are encoded (740) to construct a bitstream. This is typically done by a neural compression codec such as Neural Network Coding (NNC)/ ISO/IEC 15938-17, MPEG-7 part 17, or simply by quantizing the INR parameters and/or pruning some neurons from the network.

If one INR network is used to compress the whole signal, then the straightforward application of NNC standard will be able to optimally encode the INR parameters in the bitstream. However, for the coding tree unit (CTU) or for any kind of partition-based INR, what needs to be encoded is a collection of parameters $\Theta = \left\{\theta^p\right\}_{p=1}^{P}$ where each $\theta^p$ is associated to and can be used to reconstruct one local part of the signal. The remaining spatial and/or temporal redundancy in the collection of parameters $\Theta$ is not exploited for coding efficiency when encoded by neural compression codecs.

In one embodiment, we propose to compress the parameters of a collection of neural networks, where each set of parameters was trained so that these parameters allow a network to approximate part of a signal. We propose to perform this compression by converting this collection of parameters into one or multiple parameter images and compressing them using, for example, a traditional compression codec.

More particularly, as will be described in further detail below, we propose methods to convert a collection of INR network parameters $\Theta$ into a parameter image or a sequence of parameter images. To better exploit the spatial and temporal redundancy of the original signal that leads to redundancy in the INR network parameters, we also propose to compress these parameters by compressing the parameter image or sequence of parameter images using an auxiliary video codec. Such a codec could for example be based on video coding standards, such as a block-based hybrid video codec, e.g., VVC or HEVC, or could be based at least partially on machine learning based methods such as auto-encoders.

Single parameter image

In a first embodiment, we propose to convert all associated INR parameters into a single parameter image.

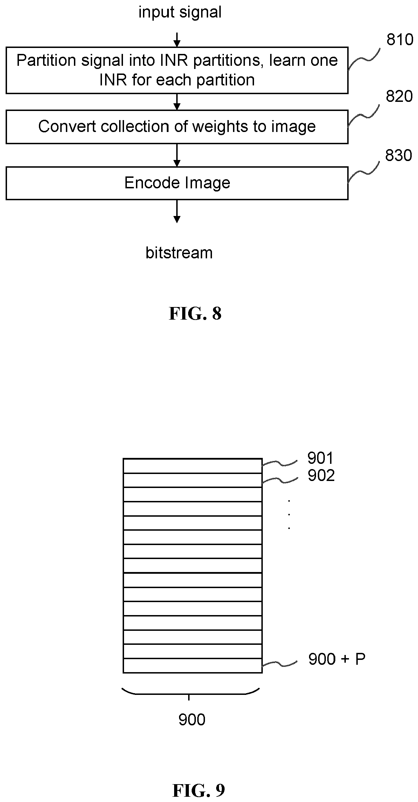

In this embodiment, as illustrated in FIG. 8, the signal is partitioned (810) into INR partitions and a collection of parameters $\left\{\theta^p\right\}_{p=1}^{P}$ are obtained, where each set of $K$ parameters $\theta^p$ is associated to one part of the signal. Each set of parameters parameterizes the same network architecture. Examples of possible signal partitioning choices include quadtree, superpixels, binary-tree, ternary-tree partitioning or Multi-Type Tree.

In one example, a brute force approach is possible for INR partitioning, where all possible INR partitions are considered. For each possible partition, the parameter image is encoded to estimate the bitrate and the signal is reconstructed to estimate the distortion. The partitioning that minimizes the rate-distortion loss function can be chosen. Another possible approach is a greedy search where an initial partition covering the whole signal is incrementally divided by evaluating the impact of a split and splitting is done if the impact in terms of rate/distortion is positive. It is also possible to build the INR partitions without learning INR networks. As an example, both a brute force or a greedy search approach could optimize other characteristics of the INR partitions, such as pixel mean, variance, texture and/or any other statistics of the signal within the considered INR partitions. We also assume this partition is already known to the decoder, for example because it has been transmitted separately or obtained from another part of a bitstream.

Convert INR parameters to a parameter image

In step 820, the network parameters $\{\theta^p\}_{p=1}^P$ for $P$ parts of the signal are converted into a parameter image. Before being converted into a parameter image, the parameter values may be quantized. The quantization range might depend on the codec. For example, some codecs may only accept 8-bit/10-bit/12-bit quantized symbols. There are many possible approaches to convert the parameters into a parameter image. In all variants for step 820, the order of the parameter sets in the parameter image may be optimized such that parameters that are close together in the parameter image are related to close parts of the signal.

In the following, we describe a few different methods of converting the INR parameters to the parameter image.

In a first variant, the INR parameters are converted to a single channel parameter image I of size $P \times K$ (alternatively, $K \times P$), where P is the number of INR partitions of the input signal and K is the number of parameters for each INR partition. Each line (alternatively, column) of parameter image I is associated to one set of parameters $\theta^p$. The parameter values of each set $\theta^p$ are arranged on the $p^{th}$ line (alternatively, column) of the parameter image. This is illustrated in FIG. 9, where the parameter image 900 contains P lines. The values of line 901 are $\theta^1$, line 902 to $\theta^2$ and so on until line 900 + P and $\theta^P$.

This variant is well suited when the partition is defined over a single dimension of the signal. For example, if the input signal is an image, there are two dimensions to the domain: the width and the height of the image. Hence this variant is well suited if the partition is defined over either the width or the height of the image. As another example, if the input signal is a video there are three dimensions to the domain of the signal: the width, the height and the temporal axis. This variant is well suited if the partition is defined over either the width, the height or perhaps more naturally, the temporal direction of the video. In yet another example, if the input signal is a static 3D scene, there are also three dimensions to the domain of the signal: the width, the height and the depth.

When the partition is defined over more than one dimension, for example both the height and the width of an image, such as coding units defined by HEVC, VVC or a fixed-size partition, a processing order must be used to order the coding units in a sequence. Many possible approaches may be used, such as depth first search or breadth first search for hierarchical structures or processing by proximity to one (or multiple, to break ties) coordinates of the signal, for example the origin coordinate.

In another variant, a parameter image is created so that each set of parameter occupies a part of the parameter image (the parameter block) whose size is a possible size for a coding unit of the auxiliary image codec used in the next step. Using HEVC as an example, the desired coding unit size would be 64x64, 32x32, 16x16, 8x8, 4x4. This is expected to help the codec exploit redundancies in the parameters. If K is smaller than the largest coding unit size (64x64 with HEVC), then the values of each set $\theta^p$ can be associated to a parameter block CxC of the smallest possible coding unit size greater than K. For example, if K = 50, the values of each set $\theta^p$ may be associated to a parameter block of size 8x8, since 50 < 64 = 8x8 and 50 > 16 = 4x4. As another example, if K = 200, the values of each set $\theta^p$ may be associated to a parameter block of size 16x16, since 200 < 256 = 16x16 and 200 > 64 = 8x8. Inside each parameter block, the pixel takes the values of the parameters of $\theta^p$ based on a pixel processing order. This order may for example be Row-Column Order (Raster Scan), Column-Row Order (Column Scan), Zigzag Order, Hilbert Curve Order or Spiral Order.

If K is greater than the largest coding unit size, the parameter values may be arranged in different channels in the parameter block. Alternatively, the parameter values may be included in multiple parameter blocks. In this variant, the two dimensions of the parameter image may be used to optimize the placement of the parameter sets in the parameter image such that parameters whose parameter blocks are close together in the parameter image are related to close coding units of the signal.

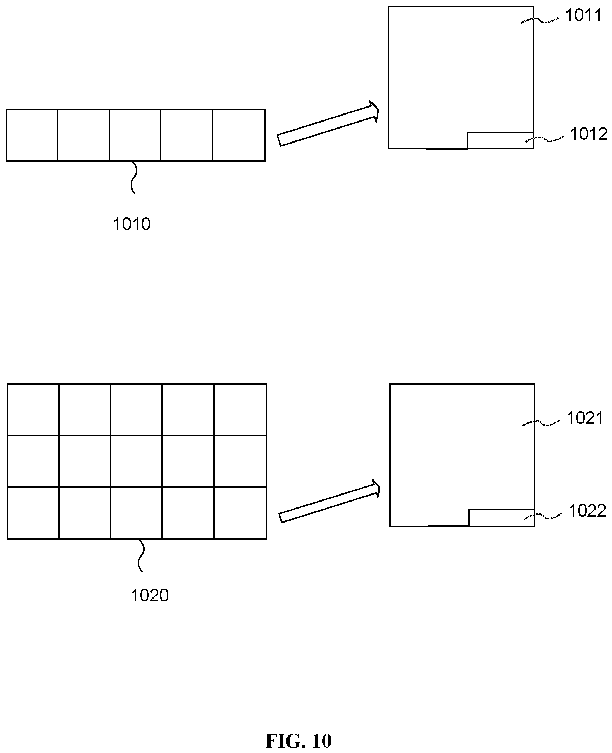

This is illustrated in FIG. 10. For example, when the partition is defined over a single dimension of the signal, the resulting parameter image 1010 will be of size $C \times (CP)$. As another example, when the partition is defined over multiple dimensions of the signal, it may be advantageous (in terms of compression result in the next step) to arrange the parameter blocks in a 2D grid so that neighboring relationships between parts of the signal can be exploited for two dimensions. As an illustration, if the original signal is a 2D image partitioned in partitions of the same size, then it may be advantageous to keep the same ordering in the partitions of the signal and the parameter blocks of the parameter image containing the parameters. So, the parameters $\theta^1$ encoding the top left part of the original 2D image would be associated to the top left parameter block of the parameter image containing the parameters. Such a parameter image 1020 would be of size $(CP^h) \times (CP^w)$, where $P^h$ and $P^w$ respectively denote the number of parts defined over the height and width of the original 2D image.

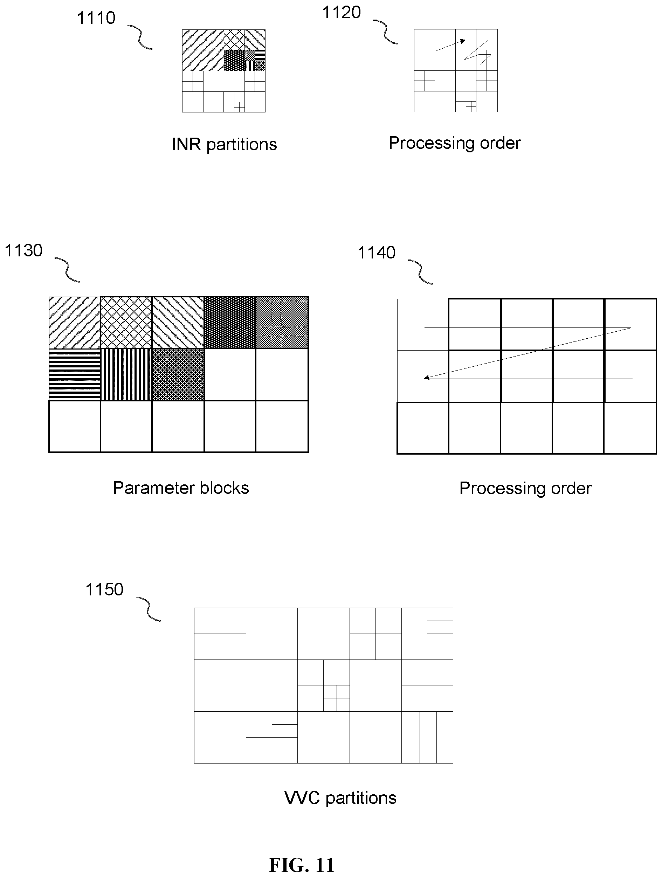

As another illustration in FIG. 11, if the original signal is a 2D image partitioned in INR partitions of different sizes (1110), associating these INR partitions to parameter blocks requires defining one processing order in the original signal and one processing order in the parameter image. The processing order may, for example, be Row-Column Order (Raster Scan), Column-Row Order (Column Scan), Zigzag Order, Hilbert Curve Order or Spiral Order. In this example, the INR partitions (1110) are processed in depth-first search order (1120) and the parameter blocks (1130) in Row-Column order (1140). The resulting associations are illustrated for the first eight parameter blocks by the pattern fills in the image. The coding units (1150) will be defined by the auxiliary coding algorithm and may be completely different from the INR partitions and parameter blocks. Note that this illustration only represents part of the image. When the number of parameters K is not equal to $C^2$, the parameter values will only fill part of the parameter blocks. In FIG. 10, this part is 1011 and 1021 in the two examples. The remaining values 1012 and 1022 are left at a default value.

In another variant, the parameter values may be arranged in the 2D parameter image in a way that minimizes the amount of empty space, for example by using as parameter blocks rectangle areas of the 2D parameter image of height $r^h$ and width $r^w$ such that $r^h r^w$ equal to or close to K. For example, if K = 120, $r^h$ = 15 and $r^w$ = 8 could be used to achieve no empty space, or $r^h$ = 8 and $r^w$ = 16 so that a parameter block corresponds to two coding unit of size 8x8.

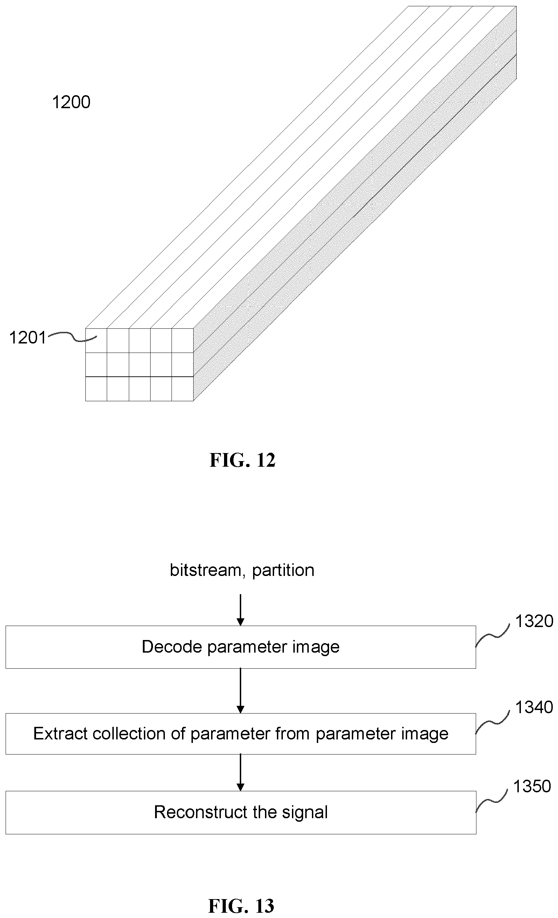

In another variant, all K parameters of a set $\theta^p$ may be associated to a single pixel of a parameter image I with K channels. The grid size may be 1 × P for a 1D grid arrangement or $P^h \times P^w$ for a 2D grid arrangement. This is illustrated in FIG. 12. The parameter image 1200 corresponds to the same partitioning arrangement as in 1020. In this example, the parameters $\theta^1$ are associated to the pixel 1201. In a variant, if the auxiliary codec is only able to process images with $l$ < K channels or is more efficient with only $l$ channels, then all K parameters of a set $\theta^p$ may be associated to a single pixel of $\lceil K/l \rceil$ parameter image I with up to $l$ channels each.

Compress the parameter image

In step 830, the parameter image is encoded into a bitstream using an auxiliary image codec able to exploit temporal and spatial redundancies, such as JPEG, HEVC or VVC or any other codecs.

Note that the coding units actually used by the auxiliary image codec may be different then the parameter blocks used.

In alternative embodiments, the parameter block arrangement (for example, size and position of parameter blocks, distance between the INR partition associated to each pair of parameter blocks) may be sent to the auxiliary image codec to guide the compression.

In one example, we assume the INR partitions are independent of the subsequent auxiliary encoding, for example, the INR partitions are pre-determined. In alternative embodiments, the INR partitions/parameters and the auxiliary encoding may be jointly (and recursively) optimized. For instance, the encoding algorithm may re-optimize the parameters, for example by adding a rate term into the loss that takes into account the bitstream size produced by step 830. Optimization may then be done using any existing algorithm, including gradient descent, reinforcement learning or alternating optimization.

Such a bitstream can be decoded for example by the following procedure, as illustrated in FIG. 13, to obtain a collection of parameters. Particularly, from the input bitstream, the parameter image is decoded (1320) using the auxiliary image codec. In step 1340, the network parameters $\{\theta^p\}_{p=1}^P$ for P INR partitions of the signal are read from the decoded parameter image. The position of the parameters in terms of pixel position and channel are given by the particular variant used. Dequantization may be performed as well, if necessary. To reconstruct (1350) the signal, these parameters would then be used in a neural network to perform inference to recover the value of the signal at input coordinates.

Parameter Video (Multiple Parameter Images)

In a second embodiment, we propose to convert all associated parameters to an input signal into multiple parameter images, that is, a parameter video. The idea is to divide the INR parameters associated to one dimension of the signal based on this dimension, and to embed these parameters in a succession of frames. This embodiment is particularly suited when using time as the aforementioned signal dimension, but it can also be used for other signal dimensions. Without loss of generality, we will focus on the first case and an input video signal in the description below.

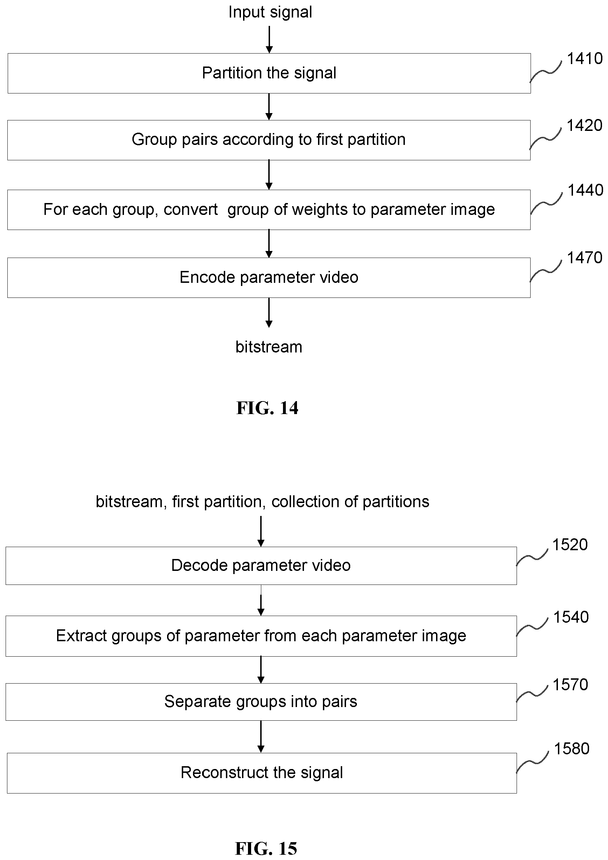

FIG. 14 illustrates an encoding algorithm according to this embodiment. In particular, the encoder partitions (1410) over time (one or multiple frames) of the input video signal and over another other video dimension (width or height) and obtains a collection of parameters $\{\theta^{p,t}\}_{p=1}^P$, where each set of K parameters $\theta^{p,t}$ is associated to one part of the video. Examples of possible choices include quadtree, superpixels, binary-tree, ternary-tree partitioning or Multi-Type Tree. We also assume this partition is already known to the decoder, for example because it has been transmitted separately or obtained from another part of a bitstream.

In step 1420, the pairs of partitions are grouped according to the temporal direction so that each group can be used for the next step. The goal is to obtain a group of collection of parameters and second-level partitions that can be converted to a parameter image that will be efficiently encoded. The most straightforward variant is to create each group using only one pair, and to order them sequentially according to the temporal direction. In another embodiment, groups may be optimized to contain more than one pair if this results in a video that is better compressed. In that case, the partitions and collections of parameters are merged to obtain a single partition and collections of parameters.

In a variant, the partition is not given and the input contains only one dimension identifier (time, in our example), a width/height partition and a collection of parameters $\{\theta^p\}_{p=1}^{P}$. The algorithm creates group directly based on this identified dimension, for example by assigning to each group the collection of parameters or a single or multiple frames.

In another variant, the input does not contain a partition but the collection of pairs is an ordered sequence of pairs. Groups are created based on this order.

In some cases, the second-level partition may not be given. In that case, the algorithm may optimize it instead to result in a video that is well compressed.

In step 1440, for each group, the partition and collection of parameters $\{\theta^p\}_{p=1}^{P}$ are converted into a parameter image. This step is identical to step 820 of the previous embodiment. All variants of this step can also be used here.

In step 1470, the parameter video is encoded into a bitstream using an auxiliary video codec such as HEVC or VVC.

Any variant/optimization described in the previous embodiment can also be applied here, but the optimization may be done at the video level. If these optimizations are based in part on the parameter values and not only on the partitions, the way the parameters are grouped may need to be included in the bitstream.

Such a bitstream can be decoded as illustrated in FIG. 15 to obtain a collection of collection of parameters, according to an embodiment. From the input bitstream, the parameter video is decoded (1520) using the auxiliary video codec. In step 1540, the group of INR network parameters $\{\theta^{p,t}\}_{p=1}^{P}$ for $P$ parts of the signal (and potentially multiple values of t) are read from the decoded parameter image. As in the previous embodiment, the position of the parameters in terms of pixel position and channel are given by the particular variant used and the partitions. Dequantization may be performed as well, if necessary.

In step 1570, the group of INR network parameters may be split to organize the parameters in the initial configuration of collection of collection of parameters. In the straightforward variant, each group correspond to one item of the outer most collection. In other variants, the split may need to be inferred from the partitions and/or additional information included in the bitstream.

To reconstruct (1580) the signal, these parameters would then be used in a neural network to perform inference to recover the value of the signal at input coordinates.

In the above, the proposed methods are mainly described with respects to 2D image video compression. However, INR is investigated for many other signals, in particular 3D scenes, objects or haptic objects, and the proposed methods can be used for any signal.

While in the above the unmodified coordinates of the image are used as input and rgb values are output. More generally, the input/output can be in other representations. For example, the input can be normalized coordinates, or the output can be in the YUV format. In addition, the image itself could also be encoded differently, for example, the output could be Fourier or Cosine transforms coefficients.

Various numeric values are used in the present application. The specific values are for example purposes and the aspects described are not limited to these specific values.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of, for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method of decoding a signal, comprising:

   decoding an image, wherein the image includes a plurality sets of INR (Implicit Neural Representation) parameters, wherein at least a sample in the decoded image represents an INR parameter;
   decoding a plurality of partitions for the signal, wherein each set of the plurality sets of INR parameters corresponds to a respective partition of the plurality of partitions of the signal; and
   reconstructing the signal based on the plurality of partitions of the signal.

2. An apparatus for decoding a signal, comprising one or more processors and at least one memory coupled to the one or more processors, wherein the one or more processors are configured to:

   decode an image, wherein the image includes a plurality sets of INR (Implicit Neural Representation) parameters, wherein at least a sample in the decoded image represents an INR parameter;
   decode a plurality of partitions for the signal, wherein each set of the plurality sets of INR parameters corresponds to a respective partition of the plurality of partitions of the signal; and
   reconstruct the signal based on the plurality of partitions of the signal.

3. The method of claim 1, or the apparatus of claim 2, wherein the image is decoded based on a block-based hybrid video decoder.

4. The method of claim 1 or 3, or the apparatus of claim 2 or 3, wherein the image is decoded according to an image or video compression standard.

5. The method of any one of claims 1 and 3-4, or the apparatus of any one of claims 2-4, wherein the image includes a plurality of regions, wherein each set of INR parameters is represented by one or more regions of the image.

6. The method of claim 5, or the apparatus of claim 5, wherein the plurality of regions are at a same size.

7. The method of any one of claims 1 and 3-6, or the apparatus of any one of claims 2-6, wherein the plurality of partitions of the signal are allowed to have different sizes.

8. The method of any one of claims 1 and 3-7, or the apparatus of any one of claims 2-7, wherein the plurality sets of INR parameters are mapped to the plurality of partitions of the signal according to a processing order.

9. The method of any one of claims 1 and 3-8, further comprising, or the apparatus of any one of claims 2-8, wherein the one or more processors are further configured to perform:
decoding information indicative of at least a size and a position of blocks in the image.

10. A method of encoding a signal, comprising:

partitioning the signal into a plurality of partitions;
obtaining a set of INR parameters representing each partition of the plurality of partitions of the signal;
converting each set of INR parameters to a corresponding region in an image, wherein at least a sample in the corresponding region represents an INR parameter of the set of INR parameters; and
encoding the image.

11. An apparatus for encoding a signal, comprising one or more processors and at least one memory coupled to the one or more processors, wherein the one or more processors are configured to:

partition the signal into a plurality of partitions;
obtain a set of INR parameters representing each partition of the plurality of partitions of the signal;
convert each set of INR parameters to a corresponding region in an image, wherein at least a sample in the corresponding region represents an INR parameter of the set of INR parameters; and
encode the image.

12. The method of claim 10, or the apparatus of claim 11, wherein the converting includes quantizing the INR parameters.

13. The method of claim 10 or 12, or the apparatus of claim 11 or 12, wherein the region is a line, a column, a square block or a rectangular block in the image.

14. The method of any one of claims 10 and 12-13, or the apparatus of any one of claims 11-13, wherein a size of the region is determined based on a number of parameters in each set of INR parameters.

15. The method of any one of claims 10 and 12-14, or the apparatus of any one of claims 11-14, wherein the signal corresponds to a plurality of pictures in a video.

105

110 Processor

120 Memory

160 Display Interface

165 Display

RF
COMP
USB
HDMI

115

130 Encoder/Decoder

140 Storage Device

170 Audio Interface

175 Audio

180 Peripheral Interface

185 Peripherals

150 Communication Interface

190 Communication Channel

100

**FIG. 1**

210    220

200

**FIG. 2**

input signal

| Learn INR parameters | 310 |

| Encode INR parameters | 320 |

bitstream

**FIG. 3**

**FIG. 4**

**FIG. 5**

620

640

$\theta^p$

x

y

600

660

x

y

r

g

b

610

680

**FIG. 6**

input signal

| Partition signal into INR partitions | 720 |

| Learn one INR for each INR partition | 730 |

| Encode partition and parameters for all INRs | 740 |

bitstream

**FIG. 7**

input signal

↓

| Partition signal into INR partitions, learn one INR for each partition | 810 |

↓

| Convert collection of weights to image | 820 |

↓

| Encode Image | 830 |

↓

bitstream

**FIG. 8**

901
902
.
.
.

900 + P

900

**FIG. 9**

1011

1012

1010

1021

1022

1020

**FIG. 10**

1110

INR partitions

1120

Processing order

1130

Parameter blocks

1140

Processing order

1150

VVC partitions

**FIG. 11**

1200

1201

**FIG. 12**

bitstream, partition

| Decode parameter image | 1320 |

| Extract collection of parameter from parameter image | 1340 |

| Reconstruct the signal | 1350 |

**FIG. 13**

Input signal

| Partition the signal | 1410 |

| Group pairs according to first partition | 1420 |

| For each group, convert group of weights to parameter image | 1440 |

| Encode parameter video | 1470 |

bitstream

**FIG. 14**

bitstream, first partition, collection of partitions

| Decode parameter video | 1520 |

| Extract groups of parameter from each parameter image | 1540 |

| Separate groups into pairs | 1570 |

| Reconstruct the signal | 1580 |

**FIG. 15**

Europäisches
Patentamt

European
Patent Office

Office européen
des brevets

# EUROPEAN SEARCH REPORT

**Application Number**

EP 24 30 6061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RUNZHAO YANG ET AL: "TINC: Tree-structured Implicit Neural Compression", ARXIV.ORG, CORNELL UNIVERSITY LIBRARY, 201 OLIN LIBRARY CORNELL UNIVERSITY ITHACA, NY 14853, 12 November 2022 (2022-11-12), XP091367569, * the whole document * | 1-15 | INV. H04N19/70 G06N3/045 G06N3/08 |
| A | US 2022/398455 A1 (DUMAS THIERRY [FR] ET AL) 15 December 2022 (2022-12-15) * abstract * * paragraphs [0003], [0004], [0035], [0040], [0056], [0065] * | 1-15 | |
| A | SICHENG LI ET AL: "[INVR] Review of related technology in INVR", 140. MPEG MEETING; 20221024 - 20221028; MAINZ; (MOTION PICTURE EXPERT GROUP OR ISO/IEC JTC1/SC29/WG11), , no. m60664 15 September 2022 (2022-09-15), XP030304288, Retrieved from the Internet: URL:https://dms.mpeg.expert/doc_end_user/d ocuments/140_Mainz/wg11/m60664-v2-Reviewof relatedtechnologyinINVR_upload_v2.zip Review of related technology in INVR_upload_v2.docx [retrieved on 2022-09-15] * section 2 * | 1-15 | |

TECHNICAL FIELDS SEARCHED (IPC)

H04N
G06N

-/--

The present search report has been drawn up for all claims

| Place of search | Date of completion of the search | Examiner |
|---|---|---|
| Munich | 17 October 2024 | Fassnacht, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

**page 1 of 2**

**EP 4 676 058 A1**

| | Europäisches Patentamt European Patent Office Office européen des brevets | **EUROPEAN SEARCH REPORT** | **Application Number** EP 24 30 6061 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ÇETINKAYA EKREM ET AL: "CTU depth decision algorithms for HEVC: A survey", SIGNAL PROCESSING. IMAGE COMMUNICATION, ELSEVIER SCIENCE PUBLISHERS, AMSTERDAM, NL, vol. 99, 20 August 2021 (2021-08-20), XP086836531, ISSN: 0923-5965, DOI: 10.1016/J.IMAGE.2021.116442 [retrieved on 2021-08-20] * abstract * * section "4.2 Deep learning models" * ----- | 1-15 | |
| E | WO 2024/184044 A1 (INTERDIGITAL CE PATENT HOLDINGS SAS [FR]) 12 September 2024 (2024-09-12) * abstract * * section "Summary", pages 1-2 * ----- | 1,2,10, 11 | |
| | | | **TECHNICAL FIELDS SEARCHED (IPC)** |

The present search report has been drawn up for all claims

| Place of search | Date of completion of the search | Examiner |
|---|---|---|
| Munich | 17 October 2024 | Fassnacht, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

22

## ANNEX TO THE EUROPEAN SEARCH REPORT
## ON EUROPEAN PATENT APPLICATION NO.

EP 24 30 6061

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2024

| Patent document cited in search report | | Publication date | Patent family member(s) | | Publication date |
|---|---|---|---|---|---|
| US 2022398455 | A1 | 15-12-2022 | BR 112022008729 | A2 | 19-07-2022 |
| | | | CN 114731397 | A | 08-07-2022 |
| | | | EP 4055825 | A1 | 14-09-2022 |
| | | | KR 20220088888 | A | 28-06-2022 |
| | | | US 2022398455 | A1 | 15-12-2022 |
| | | | WO 2021089494 | A1 | 14-05-2021 |
| WO 2024184044 | A1 | 12-09-2024 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2024053955 W